# EUROPEAN PATENT SPECIFICATION

(11) **EP 2 836 710 B1**
(45) Date of publication and mention of the grant of the patent: **14.11.2018**
(21) Application number: 12809831.6
(22) Date of filing: 29.11.2012
(51) Int. Cl.: F03G 7/06

(54) **A METHOD FOR SENSING AND CONTROLLING THE STRAIN INDUCED IN A MAGNETIC SHAPE MEMORY ALLOY ELEMENT AND A MAGNETIC SHAPE MEMORY ALLOY ACTUATOR AND SENSOR**
VERFAHREN ZUM ERFASSEN UND REGELN DER IN EINEM MAGNETISCHEN FORMGEDÄCHTNISLEGIERUNGSELEMENT HERBEIGEFÜHRTEN SPANNUNG SOWIE STELLGLIED UND SENSOR FÜR EINE MAGNETISCHE FORMGEDÄCHTNISLEGIERUNG
PROCÉDÉ POUR DÉTECTER ET COMMANDER LA CONTRAINTE INDUITE DANS UN ÉLÉMENT D'ALLIAGE MAGNÉTIQUE À MÉMOIRE DE FORME ET ACTIONNEUR ET CAPTEUR D'ALLIAGE MAGNÉTIQUE À MÉMOIRE DE FORME

(30) Priority: 29.11.2011 FI 20116196
(43) Date of publication of application: 18.02.2015
(73) Proprietor: ETO MAGNETIC GmbH, 78333 Stockach (DE)
(72) Inventor: NISKANEN, Antti, 00390 Helsinki (FI); SOROKA, Aleksandr, 00390 Helsinki (FI); SOZINOV, Oleksii, 00390 Helsinki (FI)
(74) Representative: Patentanwälte Behrmann Wagner PartG mbB
(86) International application number: PCT/FI2012/051178
(87) International publication number: WO 2013/079794

(56) References cited:
- WO-A1-03/078922
- WO-A1-2009/103159
- WO-A2-2009/071898
- US-A1- 2007 205 853
- US-A1- 2009 007 561
- JOCHEN M STEPHAN ET AL: "A Novel Concept for Strain Sensing Based on the Ferromagnetic Shape Memory Alloy NiMnGa", IEEE SENSORS JOURNAL, IEEE SERVICE CENTER, NEW YORK, NY, US, vol. 11, no. 11, 1 November 2011 (2011-11-01), pages 2683-2689, XP011363325, ISSN: 1530-437X, DOI: 10.1109/JSEN.2011.2157489

## Description

### Background of the Invention

### Field of the Invention

The present invention relates in general to actuators and their regulation in response to strain output of magnetic shape memory alloy materials that can demonstrate an actuation response to an applied external stimulus. In particular, the present invention concerns a feedback control mechanism for such actuators.

### Description of Related Art

The ability to employ actuator materials for producing a response like motion and force in response to an applied stimulus is important in a wide variety of engineering applications, including sensor technologies, mechanical stroke actuators, fastening and tightening applications, biomedical engineering and so on.

Shape memory alloys possess unique characteristics that permit them to generate a large strain output and force, i.e. an actuation stroke, by an intrinsic mechanism called a martensite to austenite phase transformation. This mechanism is reversible and repeatable. Shape memory alloys can easily operate as an on/off type actuator. US Patent Application No. 2011/0004346 discloses a shape memory alloy strain output regulation technique that enables proportional control of shape memory alloy actuators with high precision, either by using an external sensing element to measure the position of the actuator, or by using the resistance of the shape memory alloy element as a signal representative for the amount of strain.

WO 03/078922 discloses a method for sensing the strain induced in a magnetically controlled shape memory alloy element.

Deformation of a bar or rod etc. results in a change of its length and cross-section. This causes a change in its electrical resistance, which is detectable. Thus, the electrical resistance of the alloy changes as a function of strain. This function can be mapped, and no external strain gauges or sensors are needed. However, in the case of a conventional shape memory alloy, which is actuated by heating, the resistance of the element is affected not only by its deformation, but also by the change of the material's resistivity as a function of temperature. The actual amount of strain cannot therefore be accurately deduced from the measured resistance value alone.

A general problem with temperature-actuated shape memory alloys is however the nature of the temperature control itself and the hysteresis of such alloys. In many applications, like in medical devices or fuel systems, heat is not desirable, if not unthinkable. Fast-reacting, large and forceful actuators having a long stroke are also difficult to produce due to the heating and cooling required. Actuators of the foregoing type are therefore suitable for applications where the temperature can vary quickly, i.e. by applying heat to a wire. The hysteresis that needs to be taken into account slows down the response time, or complicates the control mechanism.

Relatively new type of shape memory alloys are the magnetic shape memory alloys, "MSM alloys" hereinafter. They are simultaneously shape memory and ferromagnetic alloys. In MSM-alloys it is possible to obtain a new type of behaviour called magnetic shape memory effect (MSME). An adequate description of these materials can be found in the EP Patent Specification No. 958 618. How such materials may be controlled to produce desired motion and force responses to applied magnetic field stimulus is described in US Patent No. 6,157,101. Advantage of MSM-alloys over SMA-alloys is that MSM-alloys are capable for actuation by magnetic field and the actuation does not involve time consuming heating and cooling, and for that reason they can be operated at much higher frequencies and more controlled than alloys based on temperature controlled SMA-actuation principle.

In the art there exist many Ni-, Fe- and Co-based binary or ternary compositions which exhibit the MSM-effect. Several of these MSM alloys used in actuator and sensor technology have a near-stoichiometric composition of X₂YZ, where X = Ni, Y = Mn and Z = Ga, In, Sn or Sb. So far the near-stoichiometric Ni₂MnGa-alloys are considered as best candidates for practical applications due to their low twinning stress and relatively high magnetic stress, as well as field and/or stress induced high deformation level of over 6 %. Magnetic stress of MSM-alloys is proportional to magnetocrystalline anisotropy energy MAE.

The single-crystal MSM alloys in their martensitic state contain so-called twin variants, i.e. regions in the crystal having different crystallographic orientation, but with preserved crystal lattice coherence at the interfaces. These interfaces are called twin boundaries. In MSM alloys the magnetic stress is higher than the energy required to move twin boundaries of the aforesaid twin variants. This is the reason why twin boundaries in MSM-alloys can be moved by applied magnetic field, with moderate magnitude of less than 1 Tesla.

Generally, the mechanism of deformation of both SMA and MSM-alloy single-crystals is carried out by twin boundary motion and for that reason is fully reversible, which enables a gross shape-change, without plastic, i.e. irreversible deformation. However, due to possibility for fast and controllable actuation by magnetic field, the single-crystal MSM alloys are particularly suitable for self-sensing applications, including applications which benefit from long fatigue life of over 100 million cycles.

Self-sensing in actuators based on magnetic shape memory alloys have been proposed by e.g. Sun et al. (Proc. SPIE 7493, 749359 (2009), doi:10.1117/12.840208) based on electromagnetic induction during a sudden position change such as an impact. This method is, however, limited to sensing such dynamic changes, and cannot accurately track slow changes in position, nor sense the instantaneous position of an actuator in a static state.

Sensing of the magnetization of the magnetic shape memory element is proposed as a position sensing method by Stephan et al. (IEEE Sensors Journal, 11 (2011), 2683-2689, doi:10.1109/JSEN.2011.2157489). This requires the incorporation of a Hall sensor or similar device to sense the stray field near the magnetic shape memory element, and the output signal is dependent not only on the strain of the element, but also on the magnetic field being applied to the element. Thus although the method is relatively insensitive to factors such as temperature, the measured quantity is not fully independent of the driving signal, and is therefore not completely accurate e.g. for closed-loop control of the actuator.

The present invention utilizes position sensing based on resistance of the magnetic shape memory alloy element, whose movement is actuated by a magnetic field. Since the element's resistance is not directly influenced by the magnetic field, but only by the response of the element (its change of length), the resistance signal is ideal for accurately measuring and controlling the actuator's response. This is in contrast to heat-actuated shape memory alloy actuators, where heating directly affects the resistance, and to magnetic sensing, which is affected by the actuating magnetic field. While temperature changes do affect the measured resistance also in the present invention, these changes are only secondary or environmental effects, and therefore much slower than the actuating signal, thus easy to compensate for.

The present method is equally applicable to static, quasi-static and dynamic modes of operation. It is easily implemented in any magnetic shape memory actuator and requires no extra components for position sensing, since a single element of magnetic shape memory alloy provides both the actuation and the sensing capability. An additional advantage to the method is the capability to detect early signs of fatigue damage e.g. cracks in the element material, in order to enable preventive maintenance of the actuator before failure.

### Summary of the Invention

It is an aim of the present invention to eliminate at least a part of the problems related to the known technology.

In particular, it is an aim of the present invention to provide a novel method for sensing and controlling an actuating element

It is another aim of the invention to provide a novel actuator controlling system.

It is a further aim of the invention to provide a novel actuator.

The invention is based on the provision of a method of sensing and providing feedback from an actuating element based on measuring the internal electrical resistance of the actuating element.

According to the inventive method, the magnitude of the strain in a magnetic shape memory alloy is determined by measuring its internal electrical resistance. The strain is controlled by applying a magnetic field to the element having a magnitude corresponding to a desired magnitude of strain of said element. Because of the extraordinary crystal structure of MSM alloys, it is possible use them as position sensors and strain gauges as such without a magnetic field. If mechanical tension and compression is applied to an MSM element, the strain can also in this context be measured according to the present invention by measuring and monitoring the internal resistance of the element.

A system for controlling a magnetic shape memory alloy element comprises according to the invention means for measuring the internal electrical resistance of the element, means for applying a magnetic field on the element, and means for controlling the strain of said element by controlling the strength of said magnetic field according to the value of said internal resistance.

A magnetic shape memory alloy actuator has according to the present invention an actuating element of a NiMnGa-based alloy with Magnetic Shape Memory effect and means for measuring the internal electrical resistance across said actuating element by a 4-point constant current and voltage drop measurement, and a coil structure for applying a magnetic field on said element. Ferromagnetic cores may be used to strengthen the magnetic field generated by the coil, if necessary.

More specifically, the method is mainly characterized by what is stated in the characterizing portion of claim 1.

The control system is characterized by what is stated in the characterizing portion of claim 6.

The actuator is characterized by what is stated in the characterizing portion of claim 9.

The sensor is characterized by what is stated in the characterizing portion of claim 11.

The present invention provides considerable advantages. Thus, a new and improved actuator control method and system is achieved. The control unit presented enables efficient control of the strain of an actuating element so that it can be adapted or adjusted to correspond to a preselected or predetermined actuation. The same MSM element provides both movement and position data. According to the present invention, MSM actuators can thus be controlled both with regard to movement and position by the same simple resistance measurement techniques.

The invention facilitates the use of magnetic shape memory alloys in all kinds of actuators, by making it possible to provide position data feedback inherently and reliably, thus enabling a fast and accurate control of the actuator. Gathered position or deformation information over time can be used to determine and correct, at least partially, the temperature dependency of the MSM-element, degradation (aging) of the MSM-element, non-linear response of MSM-element to magnetic fields, and differences between different elements. Thus, when this data is fed into simple and robust correction algorithms, a very reliable and precise positioning in MSM-actuation can be achieved.

Conversely, the device can be used primarily as a sensor or input device, such as a pushbutton control, which is also capable of providing tactile feedback to the operator. For example, the device can detect when an operator presses the button to initiate an action, and can respond by vibrating the button when the action is completed.

Additionally, monitoring the electrical resistance of the MSM element also enables monitoring of fatigue-induced defects in the MSM element, which manifest as anomalous resistance changes. This facilitates self-diagnosis and prediction and early detection of fatigue and structural problems: Then a replacement of the MSM actuator can be scheduled prior to any device failure.

Next, preferred embodiments of the invention will be examined more closely with the aid of a detailed description and with reference to the attached drawings.

### Brief Description of the Drawings

In the drawings,
Figure 1 shows an MSM actuating element and the geometry of the shape change during MSM-actuation;
Figure 2 illustrates the fact that the length and also cross-section of an element according to Fig. 1 varies with an applied external force;
Figure 3 shows the approximately linear but temperature sensitive resistance vs. strain dependence of a typical Ni₅₀Mn₂₈Ga₂₂ MSM element;
Figure 4 shows an actuator according to one embodiment of the invention; and
Figure 5 shows an actuator control system according to an embodiment of the invention.

### Detailed Description of Preferred Embodiments

The term Magnetic Shape Memory alloy, as used herein, covers FSMA materials (Ferromagnetic Shape Memory alloys), materials such as Ni-Mn-Ga, Ni-Fe-Ga, Ni-Fe-Co-Ga, Co-Ni-Al, Co-Ni-Ga, Fe-Pd, Fe-Pt, Ni-Mn-Ga-X-Y alloys (wherein X and Y stand for a metal, such as Co, Cu, Fe and others), metamagnetic shape memory materials such as Ni-Mn-Z, Ni-Co-Mn-Z (wherein Z stands for a metal such as In, Sn, Sb) and antiferromagnetic phases such as CoO, La2-xSrxCuO4. Additionally, the method can be applied to magnetostrictive materials such as Fe-Al, Fe-Ga, Fe-Ga-Z (wherein Z stands for an additive) which exhibit shape related stress- or field-induced resistance change.

Thus, with regard to the MSM alloys, it should here be noted that generally, the alloy is a composition of at least two of the elements included in the group of Ni, Mn, Ga, Cr, Co, Cu, Fe, Ti, Al, In, Zr, Mo, Ta, W, V, Nb, Y, Pt and Pd. Preferably the alloy contains at least two metals selected from nickel, manganese and gallium; in particular the alloys incorporate at least Ni, Mn and Ga. In another embodiment, the alloy is a composition of Ni, Mn and Ga, with an optional addition of at least one element selected from the group of Cr, Co, Cu, Fe, Ti, Al, In, Zr, Mo, Ta, W, V, Nb, Y, Pt and Pd. Typically, an additional element in addition to Ni, Mn and Ga can be present in amounts of 0.1 to 10 atom-%. Ferromagnetic martensitic alloy formed by the above constituent components are particularly interesting. As discussed, the alloy can, at least at some point of the process, be provided in austenite state.

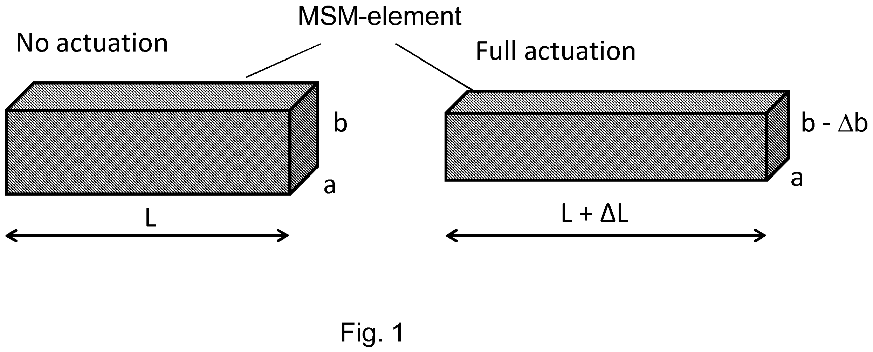

Figure 1 shows the effect of a typical strain ΔL, in the figure a MSM-element is stretching from a "rest" position (No actuation) with a length L to a maximum strain position (Full actuation) with a length L+ΔL, depending on the strength of the magnetic field applied to it. This kind of actuation is readily achievable with Ni-Mn-Ga MSM-alloys, with strain over 6%. In Fig. 1, it should be noted that the reduction of the cross-area of the element is mainly due to a reduction Δb of only side b, while side a remains essentially unchanged. Thus the electrical resistance change is a result of ΔL and Δb.

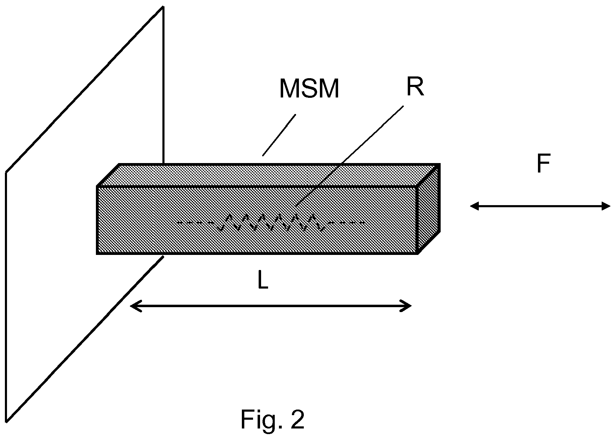

Figure 2 illustrates the fact that the length of an inventive actuating MSM-element varies with an applied external force F. Thus, it does not matter whether the deformation is induced by a magnetic field or an external force, the strain can also in this context be measured according to the present invention by measuring and monitoring the internal resistance R of the element MSM. This facilitates the use of the inventive MSM elements in various sensor applications.

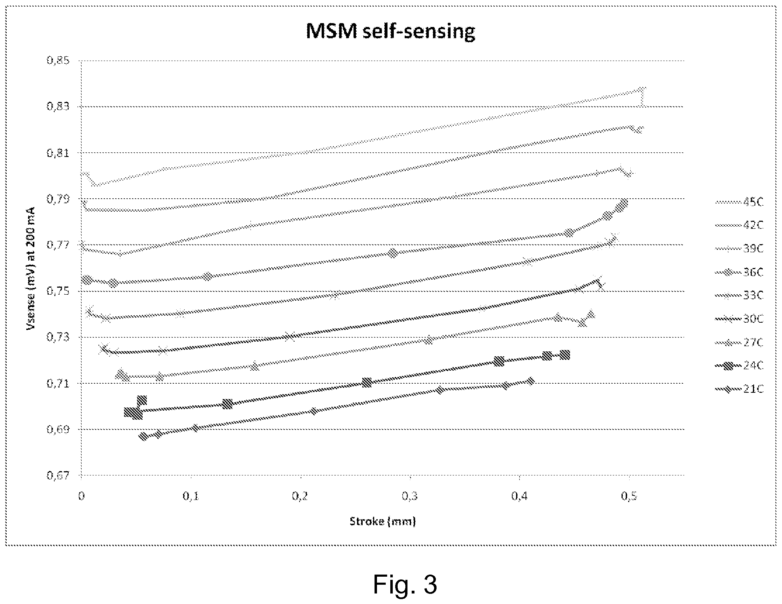

Referring now to Fig. 3, it shows the approximately linear relative resistance vs. strain dependency of a Ni-Mn-Ga MSM element according to Fig. 1. The resistance is here depicted as a measured voltage drop in mV across the element at various temperatures. A measured voltage drop needs, of course, to be divided by the applied current to get the value of the resistance. It is of course not essential to the invention to calculate the resistance value, if the measuring current is kept constant (here 200 mA). The voltage drop as such is then equally indicative of the internal resistance of the element. The strain of MSM-element is represented as displacement (stroke) in millimetres.

For example a 6 % strain of the MSM-element causes a considerable change of around 12% in the internal resistance. In contrast to conventional materials, the Ni-Mn-Ga martensite is superior in respect of fatigue. The cycle number can reach more than 100 million. Actuation cycle frequencies up to kHz region are obtainable, and a load can also be applied on the actuator.

The resistivity of Ni-Mn-Ga is 7.0×10-7 Ω·m at 20 °C, which is approximately 10 times higher than that of Ni and almost as high as for the high-resistivity alloy Nichrome. High resistivity reduces unwanted eddy-currents during magnetic actuation at high frequency.

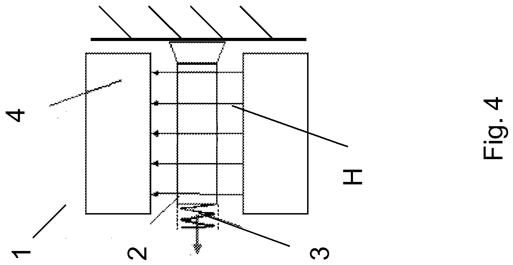

Figure 4 depicts the structure of one basic MSM actuator 1, as an example. The actuator has coil(s) (4) with a ferromagnetic core to generate and to increase and concentrate the magnetic field H. The magnetic field H is used to elongate the MSM-element 2, which is made of a MSM-alloy, for example Ni₂MnGa or its modifications. An (optional) spring 3 is applied to compress the MSM-element and is used for the return movement when the magnetic field is switched off or decreased in magnitude. The function of the compressive spring can be alternatively achieved by a magnetic field that is applied along the element's length-axis, causing it to contract.

Actuators like the one in Fig. 4, when equipped with resistance-based position sensing, can be used in switching applications as indicators or safety checks, e.g. to verify that the actuator really did close a valve or a switch in a critical safety system. The general sensing capability provided by the inventive solution can also be used in a reverse manner - in applications where a force is applied to the actuator. MSM actuator elements can be compressed by applying a force in the reverse direction of the actuation stroke caused by a magnetic field. In such an embodiment, an inventive actuator is keeping a valve closed in a liquid-handling system. If too much pressure builds up in the system, the valve will be opened by the pressure acting against the MSM element. This mechanical movement can be sensed as a change in the internal resistance, triggering a response from the control circuit, e.g. opening of the valve as a safety measure to let the excess pressure discharge, followed by closing the valve again. The same basic construction can also be used for control techniques, e.g. to regulate a flow of liquid or gas in valves and injectors, or to adjust any distance between two opposing surfaces or objects.

According to the present invention, the MSM-actuators are especially useful when a proportional movement or position information is needed. According to the present invention, this is done by providing a feedback signal indicating the strain of the actuating element by measuring its internal resistance. A so-called 4-point measurement is preferably used, i.e. one pair of wires feeds a constant current through the MSM element, and another pair of wires is used to measure the voltage drop that forms across it. The idea here is to provide an easy and cheap method to add a sensing function to an MSM actuator design - in both open and closed-loop control applications.

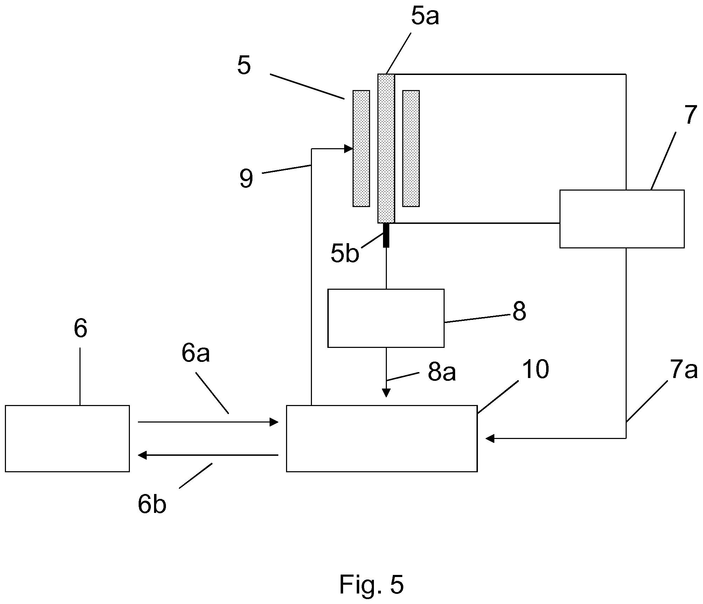

In Figure 5, an actuator 5 similar to the actuator 1 in Figure 4 is controlled by a control circuit 10. The control circuit has an input signal 6a, containing information on the desired actuation, coming from a remote process or device 6. Further inputs to the control circuit 10 include signals received from strain sensor electronics 7 and a temperature sensing unit 8. The strain sensor electronics 7 measures the resistance across the ends of the actuating element 5a, according to a 4-point measurement method known in the art and described above, and provides a feedback signal 7a in to the control circuit 10. The temperature sensing unit 8 measures the temperature of the actuator element 5a with a temperature sensor 5b, and provides a temperature signal 8a to the control circuit 10.

The control circuit 10 provides a feedback signal 6b to the remote system 6 which corresponds to the strain of the actuating element 5a, in order to provide for a closed loop control. The temperature sensing unit 8 may or may not be needed depending on the MSM alloy used and the temperature variations in the environment. See Figure 3 for a typical strain vs. internal resistance dependence and the effect of temperature.

Based on the feedback signal 7a and possibly a temperature feedback signal 8a, the control unit 10 calculates the strength of the magnetic field (H in Figure 4) needed to provide the desired actuation. The output signal 9 is then set to correspond to such actuation, and the strain of the actuating element will vary correspondingly. As has been discussed earlier, the frequency of the strain control signal 9 may vary with a frequency of at least a few hundred times per second, making it suitable and very useful for most industrial applications. Because of its simple construction and unaggressive way of actuation, the inventive actuator is also suitable for delicate and sensitive applications i.e. in medical science.

It is clear to one skilled in the art of control and automation technology how to measure the internal resistance of the actuator element and store resistance values in a lookup table or generate a mathematical expression that can be used in the control circuit 10 to compute a corresponding strain value. It is also clear to one skilled in the art that the invention is not restricted to the examples and embodiments presented above, but may vary within the scope of the appended claims.

## Claims

1. A method of sensing the strain induced in a magnetic shape memory alloy (MSM) element of a magnetic shape memory alloy actuator, said actuator being provided with a coil for generating a magnetic field to be applied to the MSM-element to elongate the MSM-element,
**characterized by** determining the magnitude of the strain (ΔL) by measuring the internal electrical resistance (R) of said element.

2. The method according to claim 1, wherein the measured internal electrical resistance (R) of said magnetic shape memory alloy element is used to determine the position of the actuator element (2; 5a) in the actuator (1; 5).

3. The method according to claim 1 or 2, **characterized by**
- controlling the strain of said element by applying a magnetic field (H) to the element, said magnetic field (H) having a magnitude corresponding to a desired strain of said element.

4. The method according to claim 3, wherein the internal electrical resistance of said magnetic shape memory alloy element is used for determining the position of the actuator element (2; 5a) in the actuator (1; 5), whereby the magnetic field (H) is used for providing an actuating stroke in said actuator.

5. The method according to claim 1, wherein the internal electrical resistance (R) of a magnetic shape memory alloy element (MSM) is used for determining a position of said element when the length (L) of the element is being altered by an external force (F).

6. A magnetic shape memory alloy actuator having martensite magnetic shape memory alloy actuating element (5a), and a magnetic coil structure (4) for applying a magnetic field (H) on said element to elongate the element,
**characterized in that** the actuator comprises:
- means (7) for providing a feedback signal indicating the strain of the actuating element by measuring the internal electrical resistance (R) across said actuating element, preferably by a 4-point constant current and voltage drop measurement.

7. The magnetic shape memory alloy actuator according to claim 6, **character i z e d** in that the internal electrical resistance (R) across said actuating element (5a) is being monitored by a control circuit (10) for anomalous changes in order to facilitate a warning signal prior to a possible failure of said actuator.

8. The magnetic shape memory alloy actuator according to claim 6 or 7, **characterized by**
- means (10) for controlling the strain of said element by controlling the strength of said magnetic (H) field in response to the value of said internal resistance.

9. The magnetic shape memory alloy actuator according to claim 8, further comprising a temperature sensing unit (8) which measures the temperature of the actuator element (5a) with a temperature sensor (5b), and provides a temperature signal (8a) to the control means (10).

## Patentansprüche

1. Verfahren zum Erfassen der in einem magnetischen Formgedächtnislegierungselement (MSM-Element) eines magnetischen Formgedächtnislegierungsaktors induzierten Dehnung, wobei der Aktor mit einer Spule zur Erzeugung eines zur Verlängerung des MSM-Elements an das MSM-Element anzulegenden Magnetfelds versehen ist, **gekennzeichnet durch**
das Bestimmen der Größe der Dehnung (ΔL) **durch** Messen des elektrischen Innenwiderstands (R) des Elements.

2. Verfahren nach Anspruch 1, wobei der gemessene elektrische Innenwiderstand (R) des magnetischen Formgedächtnislegierungselements dazu verwendet wird, die Position des Stellelements (2; 5a) in dem Aktor (1; 5) zu bestimmen.

3. Verfahren nach Anspruch 1 oder 2,
**gekennzeichnet durch**
das Regeln der Dehnung des Elements **durch** Anlegen eines Magnetfelds (H) an das Element, wobei das Magnetfeld (H) eine Stärke aufweist, die einer gewünschten Dehnung des Elements entspricht.

4. Verfahren nach Anspruch 3, wobei der elektrische Innenwiderstand des magnetischen Formgedächtnislegierungselements dazu verwendet wird, die Position des Stellelements (2; 5a) in dem Aktor (1; 5) zu bestimmen, wobei das Magnetfeld (H) zum Bereitstellen eines Stellhubs in dem Aktor verwendet wird.

5. Verfahren nach Anspruch 1, wobei der elektrische Innenwiderstand (R) eines magnetischen Formgedächtnislegierungselements (MSM) dazu verwendet wird, eine Position des Elements zu bestimmen, wenn die Länge (L) des Elements durch eine äußere Kraft (F) verändert wird.

6. Magnetischer Formgedächtnislegierungsaktor mit einem martensitischen magnetischen Formgedächtnislegierungsstellelement (5a) und einer Magnetspulenstruktur (4) zum Anlegen eines Magnetfelds (H) an das Element zur Verlängerung des Elements,
**dadurch gekennzeichnet, dass** der Aktor Folgendes umfasst:
Mittel (7) zur Bereitstellung eines die Dehnung des Stellelements angebenden Feedback-Signals durch Messung des elektrischen Innenwiderstands (R) über das Stellelement, vorzugsweise durch eine Vierpunkt-Konstantstrom- und Spannungsabfallmessung.

7. Magnetischer Formgedächtnislegierungsaktor nach Anspruch 6,
**dadurch gekennzeichnet,**
**dass** der elektrische Innenwiderstand (R) über das Stellelement (5a) zur Bereitstellung eines Warnsignals vor einem möglichen Versagen des Aktors durch einen Regelkreis (10) auf anormale Veränderungen überwachbar ist.

8. Magnetischer Formgedächtnislegierungsaktor nach Anspruch 6 oder 7,
**gekennzeichnet durch**
Mittel (10) zur Regelung der Dehnung des Elements **durch** Regelung der Stärke des Magnetfelds (H) in Reaktion auf den Wert des Innenwiderstands.

9. Magnetischer Formgedächtnislegierungsaktor nach Anspruch 8, des Weiteren umfassend eine Temperaturerfassungseinheit (8), mittels welcher die Temperatur des Stellelements (5a) mit einem Temperatursensor (5b) messbar und ein Temperatursignal (8a) an die Regelmittel (10) bereitstellbar ist.

## Revendications

1. Procédé pour détecter l'allongement induit dans un élément d'alliage magnétique à mémoire de forme (MSM) d'un actionneur d'alliage magnétique à mémoire de forme, ledit actionneur étant muni d'une bobine destinée à générer un champ magnétique à être appliqué à l'élément MSM afin d'allonger l'élément MSM,
**caractérisé par** l'étape consistant à
déterminer la grandeur de l'allongement (ΔL) en mesurant la résistance électrique interne (R) dudit élément.

2. Procédé selon la revendication 1, dans lequel la résistance électrique interne (R) mesurée dudit élément d'alliage magnétique à mémoire de forme est utilisée pour déterminer la position de l'élément d'actionneur (2 ; 5a) dans l'actionneur (1 ; 5).

3. Procédé selon la revendication 1 ou la revendication 2,
**caractérisé par** l'étape consistant à
réguler l'allongement dudit élément en appliquant un champ magnétique (H) à l'élément, ledit champ magnétique (H) ayant une magnitude correspondant à un allongement désiré dudit élément.

4. Procédé selon la revendication 3, dans lequel la résistance électrique interne dudit élément d'alliage magnétique à mémoire de forme est utilisée pour déterminer la position de l'élément d'actionneur (2 ; 5a) dans l'actionneur (1 ; 5), le champ magnétique (H) étant utilisé pour produire une course d'actionneur dans ledit actionneur.

5. Procédé selon la revendication 1, dans lequel la résistance électrique interne (R) d'un élément d'alliage magnétique à mémoire de forme (MSM) est utilisée pour déterminer une position dudit élément quand la longueur (L) de l'élément est modifiée par une force (F) extérieure.

6. Actionneur d'alliage magnétique à mémoire de forme ayant un élément d'actionnement (5a) d'alliage magnétique à mémoire de forme martensitique et une structure (4) de bobine magnétique destinée à appliquer un champ magnétique (H) audit élément afin d'allonger l'élément,
**caractérisé en ce que** l'actionneur comprend :
des moyens (7) destinés à fournir un signal de retour indiquant l'allongement de l'élément d'actionnement en mesurant la résistance électrique interne (R) à travers ledit élément d'actionnement, de préférence par une mesure de courant constant à quatre points et de chute de tension.

7. Actionneur d'alliage magnétique à mémoire de forme selon la revendication 6,
**caractérisé en ce que**
la résistance électrique interne (R) à travers ledit élément d'actionnement (5a) est surveillée par un circuit de réglage (10) pour des changements anormaux afin de faciliter un signal d'avertissement avant une panne éventuelle dudit actionneur.

8. Actionneur d'alliage magnétique à mémoire de forme selon la revendication 6 ou la revendication 7,
**caractérisé par**
des moyens (10) destinés à régler l'allongement dudit élément en réglant l'intensité du champ magnétique (H) en réponse à la valeur de ladite résistance interne.

9. Actionneur d'alliage magnétique à mémoire de forme selon la revendication 8, comprenant en outre une unité (8) de détection de température qui mesure la température de l'élément d'actionneur (5a) à l'aide d'un capteur de température (5b) et fournit un signal de température (8a) aux moyens de réglage (10).
